# EUROPÄISCHE PATENTSCHRIFT

(11) **EP 1 587 717 B1**
(45) Veröffentlichungstag und Bekanntmachung des Hinweises auf die Patenterteilung: **20.08.2008**
(21) Anmeldenummer: 03789140.5
(22) Anmeldetag: 05.12.2003
(51) Int. Cl.: B60R 21/015

(54) **SENSORVORRICHTUNG FÜR EINEN FAHRZEUGSITZ**
SENSOR DEVICE FOR A VEHICLE SEAT
DISPOSITIF CAPTEUR POUR UN SIEGE DE VEHICULE

(30) Priorität: 31.01.2003 DE 10303826
(43) Veröffentlichungstag der Anmeldung: 26.10.2005
(73) Patentinhaber: KEIPER GmbH & Co. KG, 67657 Kaiserslautern (DE)
(72) Erfinder: DIEHL, Andreas, 67731 Otterbach (DE); EDRICH, Hans, 67716 Heltersberg (DE); HIPPEL, Daniel, 67722 Winnweiler (DE); BORBE, Michael, 53359 Rheinbach (DE); SCHÜLER, Rolf, 42579 Heiligenhaus (DE); GROSSBUDDE, Frank, 42389 Wuppertal (DE)
(74) Vertreter: Patentanwälte Hosenthien-Held und Dr. Held
(86) Internationale Anmeldenummer: PCT/EP2003/013758
(87) Internationale Veröffentlichungsnummer: WO 2004/067329

(56) Entgegenhaltungen:
- WO-A-99/35012
- DE-A- 10 011 371
- DE-A- 10 121 668
- DE-A- 19 925 877
- US-A- 5 942 695
- US-A- 6 161 891
- US-B1- 6 231 076
- PATENT ABSTRACTS OF JAPAN Bd. 1999, Nr. 01, 29. Januar 1999 (1999-01-29) & JP 10 264700 A (TOYOTA MOTOR CORP), 6. Oktober 1998 (1998-10-06)

## Beschreibung

Die Erfindung betrifft eine Sensorvorrichtung für einen Fahrzeugsitz, insbesondere für einen Kraftfahrzeugsitz, der zur Längseinstellung auf jeder Seite ein Paar relativ zueinander verschiebbarer Sitzschienen aufweist, von denen die Unterschiene an der Fahrzeugstruktur befestigt wird, während an der Oberschiene ein Oberbau angebracht ist.

Eine aus der WO 99/35012 A1 bekannte Sensorvorrichtung dieser Art ist zwischen der Oberschiene und einem Zwischenrahmen angeordnet, welcher den Oberbau trägt, um vom Oberbau in die Oberschiene übertragene Kräfte zu messen. Die Sensorvorrichtung weist zwischen zwei Montageblöcken, von denen einer an dem Paar von Sitzschienen und einer an dem Zwischenrahmen angebracht ist, einen freitragenden Träger mit einzelnen Sensoren auf, welche eine Druck- oder Zugspannungsänderung im Träger detektieren. Die DE 101 21 668 A1 , als nächstliegenden Stand den Technick betrachlet, zeigt eine Lösung, bei welcher die Sensorvorrichtung zwischen der Unterschiene und dem Fahrzeugboden angeordnet ist, um vom Oberbau in den Fahrzeugboden übertragene Kräfte zu messen, wobei der Kopfteil einer Befestigungsschraube in den Bauraum innerhalb der Unterschiene ragt.

Der Erfindung liegt die Aufgabe zu Grunde, eine Sensorvorrichtung der eingangs genannten Art zu verbessern. Diese Aufgabe wird erfindungsgemäß durch eine Sensorvorrichtung mit den Merkmalen des Anspruches 1 gelöst. Vorteilhafte Ausgestaltungen sind Gegenstand der Unteransprüche.

Dadurch, dass der Kernbestandteil (funktionswesentlicher Bestandteil) der Sensorvorrichtung innerhalb des Paares von Sitzschienen angeordnet ist, d.h. die Sensorvorrichtung überwiegend innerhalb des Paares von Sitzschienen angeordnet ist, ergibt sich zum einen eine Bauraumerspamis, insbesondere in der Bauhöhe, und zum anderen bleiben die Geometrieverhältnisse oberhalb der Oberschiene im wesentlichen erhalten, so dass unabhängig vom Einbau der Sensorvorrichtung die gleichen Bauteile der Sitzstruktur verwendet werden können. Eine derartige Sensorvorrichtung lässt sich also einfach in eine bereits vorhandene, modulare Sitzstruktur integrieren. Außerdem schützt das Paar von Sitzschienen die zum Teil empfindliche Sensorvorrichtung vor Beschädigungen. Erfindungsgemäß befinden sich dann von der Sensorvorrichtung allenfalls Bereiche oder Bestandteile von untergeordneter Bedeutung, wie Befestigungselemente oder dergleichen, außerhalb des Paares von Sitzschienen. In der Regel sind, da der Oberbau an vier Punkten gelagert ist, pro Oberschiene zwei Sensorvorrichtungen vorgesehen.

In einer bevorzugten Ausführung weist die Sensorvorrichtung als einen Kernbestandteil einen biegbaren Balken auf, welcher aufgrund seiner Form platzsparend innerhalb des durch die Oberschiene definierten Bauraumes angeordnet und an der Oberschiene endseitig oder mittig aufgehängt ist. Die Verbindung zum Oberbau erfolgt vorzugsweise durch einen mittig (im Falle der endseitigen Aufhängung) bzw. endseitig (im Falle der mittigen Aufhängung) vorgesehenen Vorspnmg, welcher durch eine vorzugsweise bereits vorhandene (d.h. auch bei der Standardausführung ohne Sensorvorrichtung vorgesehene) Öffnung die Oberschiene herausragt insbesondere nach oben, und an dem vorzugsweise ein Adapter des Oberbau des Fahrzeugsitzes angebracht ist. Der Adapter kann zur Anlenkung einer oder zweier Schwingen vorgesehen sein, wobei entsprechend eine oder insgesamt zwei Sensorvorrichtungen am Adapter angebracht sind. Der Adapter ist zur Oberschiene beabstandet angeordnet, um einen gewissen Messweg zu ermöglichen. Als Überlastsicherung ist dann vorzugsweise vorgesehen, dass der Adapter bei hohen Kräften auf der Oberschiene aufsitzt, d.h. ein Kraftnebenschluss vorliegt.

Die Messung der Kräfte erfolgt bei einer bevorzugten Ausführung nach dem Biegebalkenprinzip, d.h. die Biegung des Balkens wird detektiert, und zwar entweder als Abweichung in der Geometrie oder als eine bei der Änderung der Geometrie auftretende Bewegung, Hierfür können beispielsweise Hallsensoren, Dehnmessstreifen oder andere induktive, kapazitive oder auf kristallinen Eigenschaften beruhende Sensoren vorgesehen sein. Das Biegebalkenprinzip kann auch abgewandelt sein, indem bei minimalem Messweg die Druckverhältnisse im Balken gemessen werden. Hierfür wird ein Piezosensor bevorzugt, der nur ein Messweg im atomaren Bereich (quasi Nullweg) benötigt und bereits geringste Druckänderungen im Balken detektiert. Der Piezosensor ist hierfür beispielsweise in einem Spalt des Balkens angeordnet, der dem Balken eine Scharnierfunktion gibt. Es ist aber auch möglich, statt dem Balken mit der Scharnierfunktion ein reines Scharnier zu verwenden.

Die Sensorvorrichtung kann aber auch ein tordierbares Element aufweisen, das dann anstelle des Balkens innerhalb des Paares von Sitzschienen angeordnet ist und dessen Torsion dann durch einen der genannten Sensoren detektiert wird.

Die erfindungsgemäße Sensorvorrichtung kann bei nahezu jedem Fahrzeugsitz beispielsweise zur Erkennung der Sitzbelegung, zur Messung des Gewichtes des Insassens oder zur Ermittlung der Gewichtsverteilung über mehrere Messpunkte verwendet werden. Das Sensorsignal wird beispielsweise dazu verwendet, die Auslösung von Airbags hinsichtlich Umfang und Zeit zu steuern, auch bei montierten Kindersitzen, oder um Voreinstellungen der verschiedenen Sitzeinsteller, Seitenwangen, Lordosenstützen etc. vorzugeben. Der Fahrzeugsitz kann dabei höheneinstellbar sein oder eine feste Sitzhöhe aufweisen.

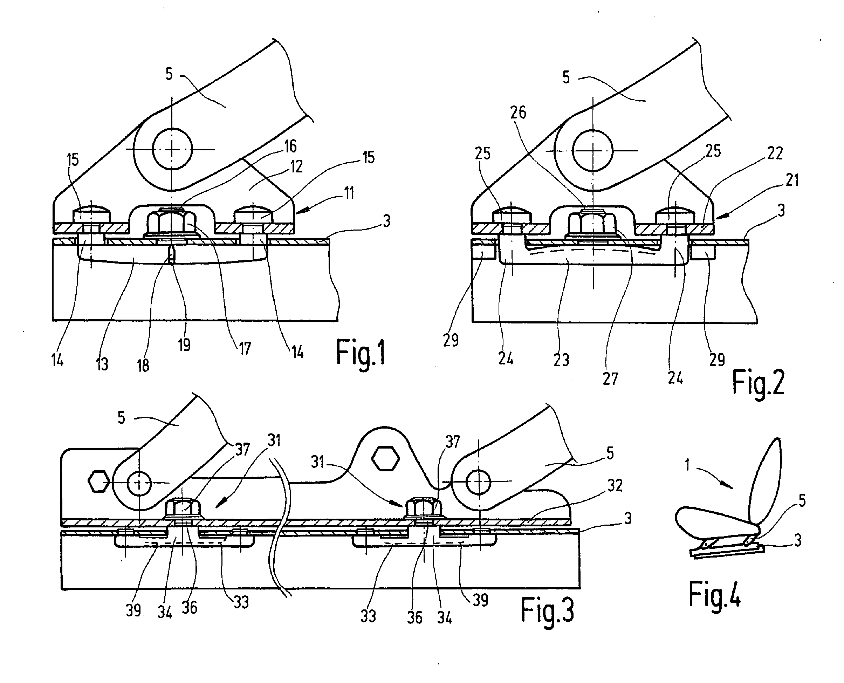

Im folgenden ist die Erfindung anhand von drei in der Zeichnung dargestellten Ausführungsbeispielen näher erläutert, Es zeigen
- Fig.1: eine teilweise geschnitten dargestellte Seitenansicht des ersten Ausführungs-beispiels,
- Fig. 2: eine teilweise geschnitten dargestellte Seitenansicht des zweiten Ausführungs-beispiels,
- Fig. 3: eine teilweise geschnitten dargestellte Seitenansicht des dritten Ausführungs-beispiels, und
- Fig. 4: eine schematisierte Darstellung eines Fahrzeugsitzes.

Bei allen drei Ausführungsbeispielen ist ein längseinstellbarer und höheneinstellbarer Fahrzeugsitz 1 für ein Kraftfahrzeug vorgesehen. Zur Längseinstellung weist der Fahrzeugsitz 1 auf jeder Seite ein Paar relativ zueinander verschiebbarer Sitzschienen auf, von denen die Unterschiene an der Fahrzeugstruktur befestigt wird, während an der Oberschiene die im folgenden als Oberbau bezeichnete weitere Fahrzeugsitzstruktur angebracht ist. Die Oberschiene ist im folgenden als Sitzschiene 3 bezeichnet. Zur Höheneinstellung dienen zwei Paare von Schwingen 5, welche an den vier Ecken des Fahrzeugsitzes 1 angeordnet sind, mit ihren unteren Enden an der dort vorhandenen Sitzschiene 3 und mit ihren oberen Enden an einem nicht näher dargestellten Sitzrahmen angelenkt sind. Die Sitzbelegung, das Gewicht des Insassens oder gegebenenfalls auch die genaue Gewichtsverteilung über verschiedene Messpunkte, soll erkannt werden, um beispielsweise das Auslösen von Airbags zu steuern.

Im ersten Ausführungsbeispiel ist eine Sensorvorrichtung 11 vorgesehen, die zwischen einem zur Anlenkung einer einzelnen Schwinge 5 an der Sitzschiene 3 vorgesehenen Adapter 12 einerseits und der Sitzschiene 3 anderseits angebracht ist und im Kraftfluß von der Schwinge 5 zur Sitzschiene 3 liegt.

Die Sensorvorrichtung 11 weist einen Balken 13 auf, der innerhalb eines durch die Sitzschiene 3 definierten Bauraumes in Längsrichtung angeordnet ist und mit zwei, jeweils an einem Ende angeformten Vorsprünge 14 durch vorzugsweise bereits vorhandene Öffnungen in der Sitzschiene 3 nach oben herausragt. Der Adapter 12 ist mittels Schrauben 15 an den beiden endseitigen Vorsprüngen 14 angeschraubt oder anderweitig befestigt, wobei die Unterseite des Adapters 12 zur Oberseite der Sitzschiene 3 beabstandet ist.

In der Mitte des Balkens 13 ist auf der Oberseite ein Gewindebolzen 16 angebracht, welcher durch eine weitere Öffnung der Sitzschiene 3 nach oben herausragt und dort mittels einer Mutter 17 mit der Sitzschiene 3 verschraubt ist, so dass der Balken 13 an der Sitzschiene 3 aufgehängt ist. Der Adapter 12 weist eine entsprechende Aussparung auf, innerhalb derer die Mutter 17 Platz findet, ohne den Adapter 12 zu berühren. Der Balken 13 kann auch auf andere Weise mittig an der Sitzschiene 3 angebracht sein.

Der Balken 13 weist in seiner Mitte auch eine Nut 18 auf, welche sich zur Unterseite des Balkens 13 hin öffnet, so daß ein Scharnier entsteht. An dem sich öffnenden Ende des Schlitzes 18 ist zwischen den beiden Hälften des Balkens 13 ein Piezosensor 19 angeordnet. Wird nun über die Schwinge 5 und den Adapter 12 eine Kraft vom Oberbau in die Sensorvorrichtung 11 eingeleitet, so wird die Kraft über den Balken 13 übertragen und der Druck auf den in der Nut 18 formschlüssig eingebrachten Piezosensor 19 ändert sich. Auf diese Weise kann durch den Piezosensor 19 über den Druck die eingeleitete Kraft gemessen werden. Der Balken 13 biegt sich zwar, so daß bei zu großen Kräften der Adapter 12 auf der Oberseite der Sitzschiene 3 aufsitzt. Jedoch ändert sich die Breite der Nut 18 nur im atomaren Bereich. Die Sensorvorrichtung 11 des ersten Ausführungsbeispiels arbeitet also nach einem abgewandelten Biegebalkenprinzip mit einer definierten Scharnierfunktion.

Im zweiten Ausführungsbeispiel ist eine Sensorvorrichtung 21 vorgesehen, die derjenigen des ersten Ausführungsbeispiels weitgehend gleicht, aber nach einem echten Biegebalkenprinzip arbeitet. Die Sensorvorrichtung 21 ist wiederum zwischen einem zur Anlenkung einer einzelnen Schwinge 5 an der Sitzschiene 3 vorgesehenen Adapter 22 einerseits und der Sitzschiene 3 anderseits angebracht und liegt im Kraftfluß von der Schwinge 5 zur Sitzschiene 3.

Die Sensorvorrichtung 21 weist ebenfalls einen Balken 23 auf, der innerhalb eines durch die Sitzschiene 3 definierten Bauraumes in Längsrichtung angeordnet ist und mit zwei, jeweils an einem Ende angeformten Vorsprüngen 24 durch vorzugsweise bereits vorhandene Öffnungen in der Sitzschiene 3 nach oben herausragt. Der Adapter 22 ist mittels Schrauben 25 an den beiden endseitigen Vorsprüngen 24 angeschraubt oder anderweitig befestigt, wobei die Unterseite des Adapters 22 zur Oberseite der Sitzschiene 3 beabstandet ist.

In der Mitte des Balkens 23 ist auf der Oberseite ein Gewindebolzen 26 angebracht, welcher durch eine weitere Öffnung der Sitzschiene 3 nach oben herausragt und dort mittels einer Mutter 27 mit der Sitzschiene 3 verschraubt ist, so daß der Balken 23 an der Sitzschiene 3 aufgehängt ist. Der Adapter 22 weist eine entsprechende Aussparung auf, innerhalb derer die Mutter 27 Platz findet, ohne den Adapter 22 zu berühren. Der Balken 23 kann auch auf andere Weise mittig an der Sitzschiene 3 angebracht sein.

Im Bereich der beiden Enden des Balkens 23 ist an der Sitzschiene 3 jeweils ein Hallsensor 29 angebracht. Wird nun über die Schwinge 5 und den Adapter 22 eine Kraft vom Oberbau in die Sensorvorrichtung 21 eingeleitet, so biegt sich der mittig angebrachte Balken 23, und zwar unter Bewegung seiner Enden, was wiederum vom Hallsensor 29 detektiert wird. Bei zu großen Kräften sitzt der Adapter 22 auf der Oberseite der Sitzschiene 3 auf.

In einer Abwandlung hierzu ist anstelle der Hallsensoren 29 ein in den mittig angebrachten Balken 23 integrierter Dehnmeßstreifen vorgesehen, welcher einer Biegung des Balkens 23 aufgrund einer Bewegung der endseitigen Vorsprünge 24 detektiert.

Im dritten Ausführungsbeispiel ist eine Sensorvorrichtung 31 vorgesehen, die denjenigen des ersten und zweiten Ausführungsbeispiels gleicht, insbesondere auch nach dem Biegebalkenprinzip arbeitet. Die Sensorvorrichtung 31 ist im Bereich der Anlenkung einer Schwinge 5 zwischen einem Adapter 32 einerseits und der Sitzschiene 3 anderseits angebracht und liegt im Kraftfluß von den Schwingen 5 zur Sitzschiene 3. Der Adapter 32 erstreckt sich jedoch über eine größere Länge und dient der Anlenkung beider Schwingen 5 auf dieser Seite des Fahrzeugsitzes 1.

Die Sensorvorrichtung 31 weist einen Balken 33 auf, der innerhalb eines durch die Sitzschiene 3 definierten Bauraumes in Längsrichtung angeordnet ist. An seinen beiden Enden ist der Balken 33 an der Sitzschiene 3 angenietet oder anderweitig angebracht, so daß er an der Sitzschiene 3 aufgehängt ist. Mittig ist am Balken 33 ein Vorsprung 34 angeformt, welcher durch eine vorzugsweise bereits vorhandene Öffnung in der Sitzschiene 3 nach oben herausragt und einen nach oben abstehenden Gewindebolzen 36 trägt. Der Adapter 32 liegt jeweils auf dem Vorsprung 34 auf und ist mittels einer Mutter 37 mit dem Gewindebolzen 36 der Sensorvorrichtung 31 verschraubt, wobei er beabstandet zur Oberseite der Sitzschiene 3 angeordnet ist. Der Adapter 32 kann auch auf andere Weise mittig am Balken 33 angebracht sein.

In den Balken 33 ist ein Dehnmeßstreifen 39 integriert. Es könnte aber auch ein Hallsensor verwendet werden. Wird nun über die Schwinge 5 und den Adapter 32 eine Kraft vom Oberbau in die Sensorvorrichtung 31 eingeleitet, so biegt sich der endseitig angebrachte Balken 23, und zwar mittig, was wiederum vom Dehnmeßstreifen 39 detektiert wird. Bei zu großen Kräften sitzt der Adapter 32 auf der Oberseite der Sitzschiene 3 auf.

### Bezugszeichenliste

- 1: Fahrzeugsitz
- 3: Sitzschiene
- 5: Schwinge
- 11, 21, 31: Sensorvorrichtung
- 12, 22, 32: Adapter
- 13, 23, 33: Balken
- 14, 24, 34: Vorsprung
- 15,25: Schraube
- 16, 26, 36: Gewindebolzen
- 17, 27, 37: Mutter
- 18: Nut
- 19: Piezosensor
- 29: Hallsensor
- 39: Dehnmeßstreifen

## Patentansprüche

1. Sensorvorrichtung für einen Fahrzeugsitz, insbesondere für einen Kraftfahrzeugsitz, der zur Längseinstellung auf jeder Seite ein Paar relativ zueinander verschiebbarer Sitzschienen aufweiset, von denen die Unterschiene an der Fahrzeugstruktur befestigt wird, während an der Oberschiene (3) ein Oberbau angebracht ist, wobei die Sensorvorrichtung zwischen dem Oberbau und der Oberschiene (3) angeordnet ist, um vom Oberbau in die Oberschiene (3) übertragene Kräfte zu messen, wobei der funktionswesentliche Kernbestandteil der Sensorvorrichtung (11, 21, 31) innerhalb des Paares der relativ zueinander verschiebbarer Sitzschienen angeordnet ist.

2. Sensorvorrichtung nach Anspruch 1, **dadurch gekennzeichnet, dass** die Sensorvorrichtung (11, 21, 31) als Kernbestandteil einen biegbaren Balken (13, 23, 33) aufweist, welcher an der Oberschiene (3) endseitig oder mittig aufgehängt ist.

3. Sensorvorrichtung nach Anspruch 2, **dadurch gekennzeichnet, dass** der Balken (13, 23, 33) mittig bzw. endseitig einen Vorsprung (14, 24, 34) aufweist, welcher durch die Oberschiene (3) herausragt.

4. Sensorvorrichtung nach Anspruch 3, **dadurch gekennzeichnet, dass** am Vorsprung (14, 24, 34) ein Adapter (12, 22, 32) des Oberbaus des Fahrzeugsitzes (1) angebracht ist.

5. Sensorvorrichtung nach Anspruch 4, **dadurch gekennzeichnet, dass** am Adapter (12, 22, 32) insgesamt zwei Sensorvorrichtungen (11, 21, 31) angebracht sind.

6. Sensorverrichtung nach Anspruch 4 oder 5, **dadurch gekennzeichnet, dass** der Adapter (12, 22, 32) bei hohen Kräften auf der Oberschiene (3) aufsitzt.

7. Sensorvorrichtung nach einem der Ansprüche 2 bis 6, **dadurch gekennzeichnet, dass** die Messung der Kräfte nach dem Biegebalkenprinzip über eine Detektion der Biegung des Balkens (13, 23, 33) erfolgt.

8. Sensorvorrichtung nach Anspruch 7, **dadurch gekennzeichnet, dass** die Detektion der Biegung des Balkens (13, 23, 33) mittels eines Hallsensors (29) oder eines Dehnmessstreifens (39) erfolgt.

9. Sensorvorrichtung nach einem der Ansprüche 2 bis 6, **dadurch gekennzeichnet, dass** die Messung der Kräfte über eine Detektion der Druckverhältnisse im Balken (13) erfolgt.

10. Sensorvorrichtung nach Anspruch 9, **dadurch gekennzeichnet, dass** die Detektion der Druckverhältnisse im Balken (13) mittels eines Piezosensors (19) erfolgt.

11. Sensorvorrichtung nach Anspruch 10, **dadurch gekennzeichnet, dass** der Piezosensor (19) in einem ein Scharnier definierenden Spalt des Balkens (13) angeordnet ist.

12. Fahrzeugsitz mit wenigstens einer Sensorvorrichtung nach einem der Ansprüche 1 bis 11.

## Claims

1. Sensor device for a vehicle seat, in particular for a motor vehicle seat which has, for longitudinal adjustment at each side, a pair of seat rails which can be displaced relative to each other, the lower rail of which is secured to the vehicle structure, whilst an upper structure is fitted to the upper rail (3), the sensor device being arranged between the upper structure and the upper rail (3), in order to measure forces transmitted from the upper structure into the upper rail (3), the functionally significant core component of the sensor device (11, 21, 31) being arranged within the pair of the seat rails which can be moved relative to each other.

2. Sensor device according to claim 1, **characterised in that** the sensor device (11, 21, 31) has, as a core component, a bendable bar (13, 23, 33) which is suspended on the upper rail (3) at the end or at the centre.

3. Sensor device according to claim 2, **characterised in that** the bar (13, 23, 33) has, at the centre or at the end, a projection (14, 24, 34) which protrudes through the upper rail (3).

4. Sensor device according to claim 3, **characterised in that** an adapter (12, 22, 32) of the upper structure of the vehicle seat (1) is fitted to the projection (14, 24, 34).

5. Sensor device according to claim 4, **characterised in that** a total of two sensor devices (11, 21, 31) are fitted to the adapter (12, 22, 32).

6. Sensor device according to claim 4 or 5, **characterised in that** the adapter (12, 22, 32) rests on the upper rail (3) in the event of great forces.

7. Sensor device according to any one of claims 2 to 6, **characterised in that** the measurement of the forces is carried out in accordance with the flexion bar principle by means of detection of the flexion of the bar (13, 23, 33).

8. Sensor device according to claim 7, **characterised in that** the detection of the flexion of the bar (13, 23, 33) is carried out by means of a Hall sensor (29) or a strain gauge (39).

9. Sensor device according to any one of claims 2 to 6, **characterised in that** the measurement of the forces is carried out by means of detection of the pressure relationships in the bar (13).

10. Sensor device according to claim 9, **characterised in that** the detection of the pressure relationships in the bar (13) is carried out by means of a piezo sensor (19).

11. Sensor device according to claim 10, **characterised in that** the piezo sensor (19) is arranged in a gap of the bar (13) that defines a hinge.

12. Vehicle seat having at least one sensor device according to any one of claims 1 to 11.

## Revendications

1. - Dispositif détecteur pour un siège de véhicule, en particulier pour un siège de véhicule automobile, qui, pour le réglage en longueur, présente de chaque côté, une paire de rails de siège déplaçables l'un par rapport à l'autre, dont le rail inférieur est fixé sur la structure du véhicule, alors que, sur, le rail supérieur (3), est rapportée une structure supérieure, le dispositif détecteur étant disposé entre la structure supérieure et le rail supérieur (3), pour mesurer des forces transmises par la structure supérieure dans le rail supérieur (3), l'élément de coeur essentiel à la fonction du dispositif détecteur (11, 21, 31) étant disposé à l'intérieur de la paire des rails de siège déplaçables l'un par rapport à l'autre.

2. - Dispositif détecteur selon la revendication 1, **caractérisé par le fait que** le dispositif détecteur (11, 21, 31) présente, comme élément de coeur, une poutre flexible (13, 23, 33), laquelle est accrochée aux extrémités ou de façon centrale au rail supérieur (3).

3. - Dispositif détecteur selon la revendication 2, **caractérisé par le fait que** la poutre (13, 23, 33) présente de façon centrale ou aux extrémités une saillie (14, 24, 34) qui passe à travers le rail supérieur (3).

4. - Dispositif détecteur selon la revendication 3, **caractérisé par le fait que**, sur la saillie (14, 24, 34), est rapporté un adaptateur (12, 22, 32) de la structure supérieure du siège de véhicule (1).

5. - Dispositif détecteur selon la revendication 4, **caractérisé par le fait que**, sur l'adaptateur (12, 22, 32) sont rapportés au total deux dispositifs détecteurs (11, 21, 31).

6. - Dispositif détecteur selon l'une des revendications 4 ou 5, **caractérisé par le fait que** l'adaptateur (12, 22, 32) porte sur le rail supérieur (3) en cas de forces élevées.

7. - Dispositif détecteur selon l'une quelconque des revendications 2 à 6, **caractérisé par le fait que** la mesure des forces a lieu selon le principe de la poutre flexible sur une détection de la flexion de la poutre (13, 23, 33).

8. - Dispositif détecteur selon la revendication 7, **caractérisé par le fait que** la détection de la flexion de la poutre (13, 23, 33) a lieu au moyen d'un détecteur à effet Hall (29) ou d'une bande de mesure d'allongement (39).

9. - Dispositif détecteur selon l'une des revendications 2 à 6, **caractérisé par le fait que** la mesure des forces a lieu sur une détection des rapports de pression dans la poutre (13).

10. - Dispositif détecteur selon la revendication 9, **caractérisé par le fait que** la détection des rapports de pression dans la poutre (13) a lieu au moyen d'un détecteur piézo (19).

11. - Dispositif détecteur selon la revendication 10, **caractérisé par le fait que** le détecteur piézo (19) est disposé dans une fente de la poutre (13) définissant une charnière.

12. - Siège de véhicule présentant au moins un dispositif détecteur tel que défini à l'une des revendications 1 à 11.
